## Europäisches Patentamt
## European Patent Office
## Office européen des brevets

(19)

(11) Veröffentlichungsnummer: **0 000 553**
**B1**

(12) **EUROPÄISCHE PATENTSCHRIFT**

(45) Veröffentlichungstag der Patentschrift: **12.01.83**

(51) Int. Cl.³: **B 62 M 1/18, A 63 B 23/04**

(21) Anmeldenummer: **78100455.1**

(22) Anmeldetag: **20.07.78**

(54) Fahrradähnliches Zweiradfahrzeug.

(30) Priorität: **30.07.77 DE 2734560**

(43) Veröffentlichungstag der Anmeldung:
**07.02.79 Patentblatt 79/3**

(45) Bekanntmachung des Hinweises auf die Patenterteilung:
**12.01.83 Patentblatt 83/2**

(84) Benannte Vertragsstaaten:
**BE CH FR GB NL SE**

(56) Entgegenhaltungen:
**CH - A - 248 369**
**DE - C - 57 280**
**DE - C - 662 428**
**GB - A - 457 307**
**US - A - 1 377 886**

(73) Patentinhaber: **Bals, Hans Günter, Dipl.-Ing.**
**Blümgesgrund 44**
**D-6460 Gelnhausen (DE)**

(72) Erfinder: **Bals, Hans Günter, Dipl.-Ing.**
**Blümgesgrund 44**
**D-6460 Gelnhausen (DE)**

(74) Vertreter: **Beyer, Werner, Dipl.-Ing. et al,**
**Staufenstrasse 36, II P.O. Box 174109**
**D-6000 Frankfurt/Main (DE)**

Courier Press, Leamington Spa, England.

### Fahrradähnliches Zweiradfahrzeug

Die Erfindung betrifft ein fahrradähnliches Zweiradfahrzeug mit einem aus vier gelenkig miteinander verbundenen Teilen bestehenden Rahmen, von denen der obere Rahmenteil einen Sattel, der vordere Rahmenteil eine drehbar gelagerte und mit einer Lenkstange verbundene Vorderradgabel und der untere Rahmenteil das Hinterrad und das treibende Kettenrad eines Kettentriebs trägt, am vorderen oder unteren Rahmenteil Fußstützen angebracht sind und zwischen dem oberen Rahmenteil und einer mit dem treibenden Kettenrad drehfest verbundenen Kurbel ein beidseitig gelenkig gelagertes Pleuel angeordnet ist.

Normalerweise sind bei Fahrrädern die Rahmenteile untereinander und mit den Streben der Hinterradgabel fest verschweißt oder verschraubt. Der Antrieb erfolgt in bekannter Weise mittels Fußkraft über mit dem treibenden Kettenrad verbunde Pedale. Der Sattel und das Lager der Vorderradgabel sind relativ zueinander und zum Rahmen fest.

Es sind auch zahlreiche fahrradähnliche Zweiradfahrzeuge bekannt geworden, bei denen Sattel, Lenkerachse und Tretlager relativ zueinander beweglich sind und die Füße des Fahrers parallel zueinander bewegt werden (vgl. z.B. DE—C—57 280, DE—C—662 428, G—A—457 307, US—A—1 377 886). Dabei trägt jedoch normalerweise ein fester Rahmen sowohl das Hinterrad als auch die Vorderradgabel, so daß der Achsabstand der Räder während der Fahrt konstant bleibt. An dem starren, tragenden Rahmen sind verschiedene zusätzliche Hebel und Kurbeln drehbar gelagert, welche die abwechselnd auf den Sattel und die Fußstützen ausgeübten Kräfte in ein Antriebsdrehmoment umsetzen. Alle diese Konstruktionen haben den Nachteil, daß sie notwendigerweise verhältnismäßig schwer sind weil ebenso wie bei einem Fahrrad ein in sich steifer, tragfähiger Rahmen vorhanden sein muß und daneben ein im Vergleich zum Fahrrad sehr viel komplizierterer und schwerer Antriebsmechanismus.

Es ist auch schon bekannt (CH—A—248 369), auf den steifen, tragenden Rahmen zu verzichten und statt dessen einen aus vier gelenkig miteinander verbundenen Teilen bestehenden, über ein Peuel auf den Kettentrieb einwirkenden Rahmen vorzusehen, wobei dieselben Rahmenteile zwei Funktionen gleichzeitig übernehmen können, nämlich zu tragen und zusätzlich ein Antriebs- Hebelsystem zu bilden. Auf diese Weise werden die Rahmenteile zweifach genutzt und es stehen für die Antriebsübersetzung ohne zusätzliches Gewicht lange Hebel zur Verfügung. Da sich alle Rahmenteile während der Fahrt mit Bezug auf die Radachsen auf und ab sowie vor und zurück bewegen und die Lenkstange en dieser Bewegung teilnimmt, kann der Fahrer durch Zurückziehen und Vorschieben der Lenkstange ein zusätzliches Antriebsdrehmoment erzeugen.

Weil bei einem Fahrzeug der eingangs genannten Art der Vortrieb abwechselnd in zwei Phasen stattfindet, während der Fahrer sein Gewicht mal auf den Sattel und mal auf die Fußstützen verlagert und sich Sattel und Fußstützen jeweils gegenläufig auf und ab bewegen, kommt es für die Fahreigenschaften entscheidend darauf an, daß der Vortrieb in beiden Phasen angenähert gleich ist, weil sich beim Fahren bergauf die maximale Steigung allein nach der Phase mit dem schwächeren Vortrieb bestimmt und außerdem grundsätzlich das Fahren als angenehmer empfunden wird, wenn die Körperbewegungen in beiden Phasen gleichmäßig sind. Geht man davon aus, daß abwechselnd der Sattel und dann die Fußstützen jeweils etwa mit gleicher Kraft entsprechend dem Gewicht des Fahrers belastet werden, so sollten auch die Hübe des Sattels und der Fußstützen nicht allzu verschieden sein, damit in beiden Phasen angenähert die gleiche mechanische Arbeit geleistet und das gleiche Drehmoment am Hinterrad erzeugt wird.

Bei dem bekannten Fahrzeug mit vierteiligen Gelankrahmen endet der untere Rahmenteil an der Hinterradachse. Der hintere Rahmenteil erstreckt sich von einem am hinteren Ende des unteren Rahmenteils unmittelbar neben der Hinterradachse angeordneten Gelenk zu einem kurz vor dem Sattel am oberen Rahmenteil ausgebildeten Gelenk. Unter Berücksichtigung der durch die menschlichen Körpermaße gesetzten konstruktiven Grenzen kann sich bei einer solchen Ausführung nur ein geringer Hub des Sattels, noch dazu verbunden mit einer unangenehm starken Schrägstellung, ergeben, so daß das Fahrzeug schon bei kleinsten Steigungen jeweils in derjenigen Phase, in welcher der Sattel belastet wird, stehenbleibt und auch in der Ebene höhere Geschwindigkeiten nicht erreicht werden können.

Der Erfindung liegt die Aufgabe zugrunde, ein Fahrzeug der eingangs genannten Art dahingehend zur verbessern, daß der Bewegungsablauf über beide Antriebsphasen hinweg gleichmäßiger und harmonischer wird und dadurch auch die Fahrleistungen verbessert werden.

Vorstehende Aufgabe wird erfindungsgemäß dadurch gelöst, daß sich der untere Rahmenteil mit seinem hinteren Ende bis über die Hinterrachdachse hinaus erstreckt und als zweiarmiger Hebel wirkt.

Durch die vorgeschlagene Verlängerung des unteren Rahmenteils nach hinten über die Hintarradachse hinaus steht dort ein zusätzlicher Hebelarm zur Verfügung, der während der Schwenkbewegungen des unteren Rahmenteils um die Hinterradachse den Hub des Sattels wesentlich vergrößert und einen Momentenarm für die auf den Sattel ausgeübte Kraft bildet. Weil auf diese Weise die Hubbewegung des Sattels im wesentlichen durch den unteren und hinteren Rahmenteil erzeugt wird, braucht der obere Rahmenteil nicht so stark gekippt zur werden, und die Schrägstellung des Sattels kann minimal sein. Zum angenehmen Fahrerlebnis trägt weiterhin eintscheidend bei, daß wegen der ausgeglichenen Fahreigenschaften in beiden Antriebsphasen auch die Körperbewegungen des Fahrers gleichmäßig sind, d.h. er schwebt, während er die Beine ausstreckt und wieder anzieht, gleichmäßig auf und ab, und es ist vermieden, daß er die Fußstützen ruckartig schnell nach unten drückt, aber dann jeweils bei Belastung des Sattels in der Körper- und Fahrbewegung ganz langsam wird. Die Ausgeglichenheit der Kräfte und Bewegungen in beiden Phasen in Verbindung mit der Schwenkbewegung des Lenkers in Fahrtrichtung vermittelt dem Fahrer den Eindruck des Reitens.

In bevorzugter Ausgestaltung der Erfindung erstreckt sich der untere Rahmenteil soweit über die Hinterradachse hinaus, daß sich das Gelenk zwischen dem hinteren und dem unteren Rahmenteil radial außerhalb des Hinterrads befindet. Bei vorgegebenen Außenmaßen des Fahrzeugs ergibt sich dabei der längstmögliche, den Hub des Sattels und das Antriebsdrehmoment vergrößernde Hebelarm, und es wird der für die Steifigkeit und Robustheit des Rahmens wesentliche Vorteil gewonnen, daß der untere Rahmenteil einstückig aus zwei am hinteren Ende durch einen Steg verbundenen parallelen Streben bestehen kann und ein einziges einfaches Lager zwischen dem unteren und dem hinteren Lagerteil genügt.

Es ist zur Überwindung der Totpunkte der Antreibsbewegung zwischen den beiden abwechselnden Bewegungsphasen vorteilhaft, wenn zwischen dem Hinterrad und dem Treibenden Kettenrad mittels der Kette eine drehfeste Verbindung besteht. Im Bereich der Totpunkte treibt dann das Hinterrad das vordere Kettenrad an. Andererseits kann es wegen der erfindungsgemäß erreichten großen Hubhöhe des Sattels erwünscht sein, das Fahrzeug rollen zu lassen, ohne daß sich der Sattel hebt und senkt. Um auch einen solchen Fahrzustand zu ermöglichen, kann in zweckmäßiger Weiterbildung der Erfindung zwischen dem getriebenen Kettenrad und dem Hinterrad eine willkürlich lösbare Kupplung oder eine einstellbare Rutschkupplung angeordnet sein. Als weitere Ausgestaltung kann dabei eine Gangschaltung vorgesehen sein.

Besondere Maßnahmen müssen getroffen werden, wenn, ebenfalls zum gelegentlichen Aussetzen der großen Hubbewegungen des Sattels, das Hinterrad eine Freilaufnabe hat, wie sie bei Fahrrädern mit und ohne Rücktritt sowie mit offener oder Nabengangschaltung oder auch ohne Gangschaltung vorkommt. Da in allen diesen Fällen der Freilauf kein ausreichend starkes Schleppmoment erzeugt, um die beiden Totlagen, in denen die Kurbel und das Pleuel gleichgerichtet sind, zu überwinden, ist in diesem Anwedungsfall in bevorzugter Ausführung der Erfindung ein zwischen dem Pleuel und einem Rahmenteil wirkender Federmechanismus vorgesehen, der vorzugsweise aus einer mit dem hinteren Rahmenteil oder dem Pleuel gelenkig und mit dem jeweils anderen dieser beiden Teile über wenigstens eine Feder verbundenen Stange besteht.

Indem das neue Gerät aufgebockt wird, kann es auch als sog. Home-Trainer verwendet werden, wobei der Einfachheit halber das Hinterrad durch eine Schwungscheibe und das Vorderrad durch eine den vorderen Rahmenteil unterstützende rollende, Gleit- oder Gelenkführung ersetzt werden können.

Die Erfindung wird nachstehend anhand der Zeichnung näher erläutert. Es zeigen:
Fig. 1 eine schematische Seitenansicht einer ersten Ausführungsform der Erfindung,
Fig. 2 in Seitenansicht ein gegenüber Fig. 1 abgewandeltes Ausführungsbeispiel,
Fig. 3 a, b einen Querschnitt und eine Seitenansicht eines Gelenks des Fahrzeugrahmens,
Fig. 4 einen Teilschnitt durch eine Hinterradnabe, die zur Verwendung bei den Fahrzeugen nach Fig. 1 und 2 geeignet ist.

In den Zeichnungsfiguren sind sinngemäß übereinstimmende Teile mit denselben Bezugszeichen versehen.

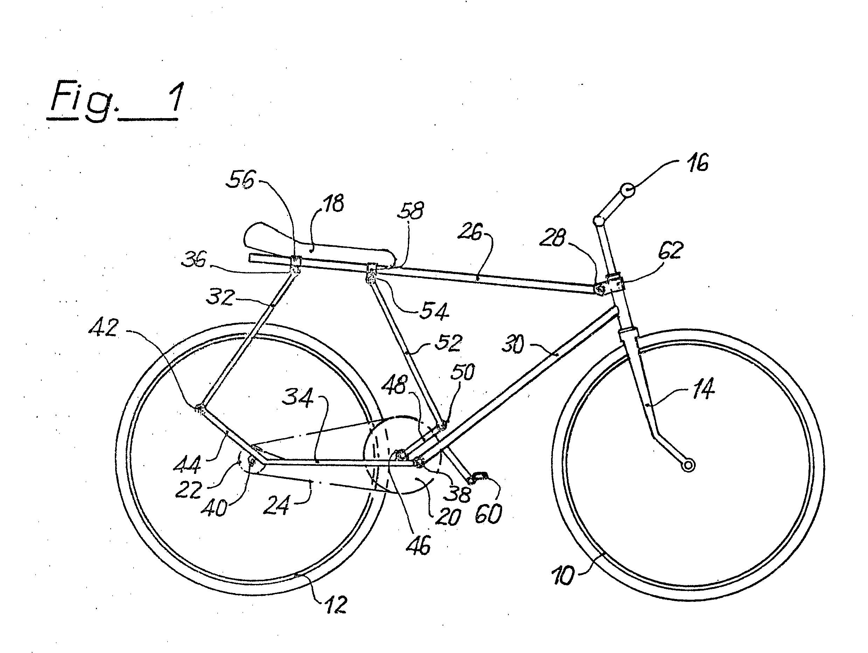

Das als Ausführungsbeispiel in Fig. 1 dargestellte Fahrzeug entspricht hinsichtlich der Räder 10, 12, der Vorderradgabel 14 und des Lenkers 16 einem normalen Fahrrad. Auch der Sattel 18 sowie der Kettentrieb, bestehend aus einem vorderen, treibenden Kettenrad 20, einem auf der Achse des Hinterrads sitzenden getriebenen Kettenrad 22 und einer Kette 24, sind handelsübliche Teile. Dasselbe gilt für das normale Fahrradzubehör, wie z.B. Schutzbleche, Lampen und Rückstrahler, Bremsen und Gangschaltung, Gepäckträger und dgl.

Eine Besonderheit des neuen Fahrzeuges sind zahlreiche Gelenke zwischen den verschiedenen Teilen des Rahmens. Sämtliche dargestellten Gelenke haben eine horizontale Drehachse.

Im einzelnen besteht der Rahmen aus einem oberen Rahmenteil 26, welcher über ein Gelenk 28 mit einem vorderen Rahmenteil 30 verbunden ist. Zu dem letzteren gehört das Lager der Vorderradgabel 14 und des Lenkers 16. Außberdem ist mit dem oberen Rahmenteil 26 über ein Gelenk 36 ein hinterer Rahmenteil 32 verbunden, der wiederum über Gelenke 42 mit einem unteren Rahmenteil 34 verbunden ist. Letzterer ist außerdem über ein Gelenk 38 am vorderen Rahmenteil 30 angelenkt. Der hintere Rahmenteil 32 und der untere Rahmenteil 34 bestehen jeweils aus Streben, die zu beiden Seiten des Hinterrads parallel angeordnet sind. Die Streben des unteren Rahmenteils 34 reichen dabei mit ihrem hinteren Ende 44 über die Hinterradachse 40 hinaus. Das hintere Ende 44 kann um z.B. 10 bis 60° nach oben abgebogen oder abgewinkelt sein.

Im Ausführungsbeispiel ist das Gelenk 38 aus fertigungstechnischen Gründen getrennt von dem mit 46 bezeichneten Lager des treibenden Kettenrads 20. Dieses Lager ist fest an dem unteren Rahmenteil 34 angebracht, so daß der Achsabstand zwischen den beiden Kettenrädern 20, 22 konstant ist. Mit dem Kettenrad 20 ist gemäß Fig. 1 zu beiden seiten des Lagers 46 je eine Kurbel 48 drehfest verbunden. Beide Kurbeln erstrecken sich vom Lager 46 aus in dieselbe Richtung und sind gleich lang. Jede Kurbel 48 ist über ein an ihrem freien Ende angebrachtes Gelenk 50 mit einer Pleuelstange 52 verbunden, welche am oberen Ende über ein Gelenk 54 am oberen Rahmenteil 26 angreift. Die Gelenke 36 und 54 sind im Beispielsfall mittels Klemmschellen 56 bzw. 58 am oberen Rahmenteil 26 befistigt, so daß sie längs des Rohrs, welches den oberen Rahmenteil 26 bildet, verstellt werden können. Auch der Sattel 18 ist in ähnlicher Weise längs des oberen Rahmenteils verstellbar. Das Gelenk 28 ist gleichfalls mittels einer Klemmschelle 62 verstellbar.

Am vorderen Rahmenteil 30 sind im unteren Bereich in ihrer Höhe einstellbare Fußstützen 60 angebracht. Wie ersichtlich, wird in derjenigen Bewegungsphase, in welcher der Fahrer sein Gewicht auf den Fußstützen 60 abstüzt, das Lager 46 des treibenden Kettenrads 20 zusammen mit dem vorderen Rahmenteil 30 mit Bezug auf das untere Gelenk 50 des Pleuels 52 nach unten gedrückt. Nach Überschreiten des unteren Totpunktes wird dann das Lager 46 mit Bezug auf das Gelenk 50 wieder angehoben, wenn der Fahrer in der nächsten Bewegungsphase sein Gewicht stärker auf den Sattel verlagert und dabei über den hinteren Rahmenteil 32 den unteren Rahmenteil 34 um dessen Abstützung an der Hinterradachse 40 mit Bezug auf die Zeichnung gegen den Uhrzeigersinn verschwenkt.

Die Drehung des Lagers 46 um das Gelenk 50 bedeutet wegen der drehfesten Verbindung zwischen dem treibenden Kettenrad 20 und den Kurbeln 48 gleichzeitig eine Drehung des Kettenrads 20, wodurch der Antrieb auf das Hinterrad erfolgt. Weiterhin bringt die zyklische Bewegung der Kurbel 48 und des Pleuels 52 eine abwechselnde Spreizung und Verengung des aus den Rahmenteilen 26, 30, 32, 34 gebildeten Gelenk-Vierecks mit sich, was zur der erwünschten Relativbewegung zwischen dem Sattel 18, dem Lenker 16 und den Fußstützen 60 führt.

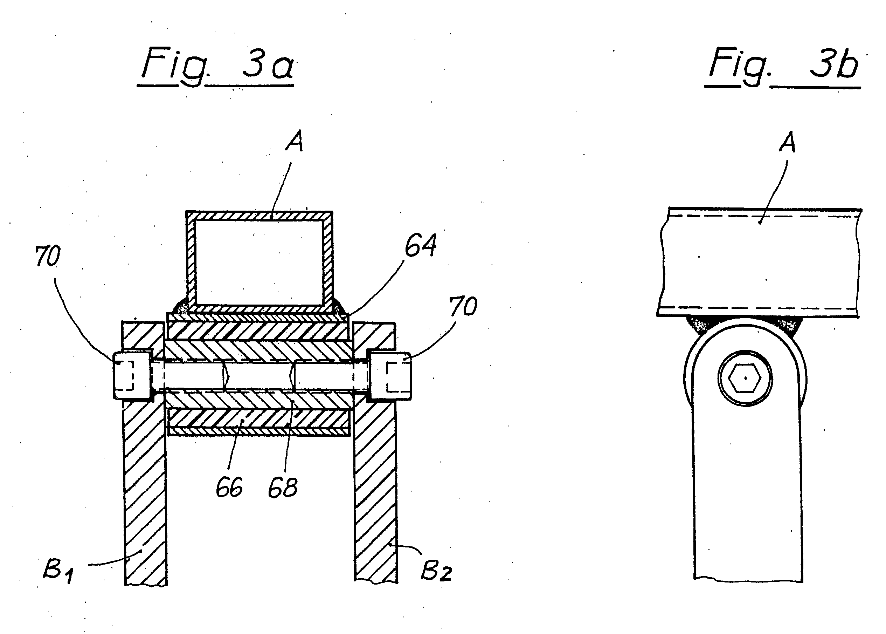

Bei einem praktischen Ausführungsbeispiel mit 26-Zoll-Rädern kann der obere Rahmenteil 26 eine Länge von 85 cm und der vordere Rahmenteil 30 zwischen den Gelenken 28 und 38 eine Länge von 60 cm haben. Die Pleuelstangen 52 sind im Beispielsfall 38 cm, die Kurbeln 48 sind 12 cm, die Streben des hinteren Rahmenteils 32 sind 40 cm und die Streben des unteren Rahmenteils 34 sind zwischen dem Gelenk 38 und der Hinterradachse 40 37 cm und im hinteren Abschnitt 44 18 cm lang. Die Abstände zwischen den Gelenken am oberen Rahmenteil 26 können z.B. so eingestellt werden, daß der Abstand zwischen den Gelenken 28 und 54 50 cm und der Abstand zwischen den Gelenken 54 und 36 25 cm beträgt. Die Gelenke 42 und 50 enthalten Kugellager, während die Gelenke 28, 36, 38 und 54 gemäß Fig. 3 a, b ausgebildet sind. Darauf wird weiter unten noch eingegangen.

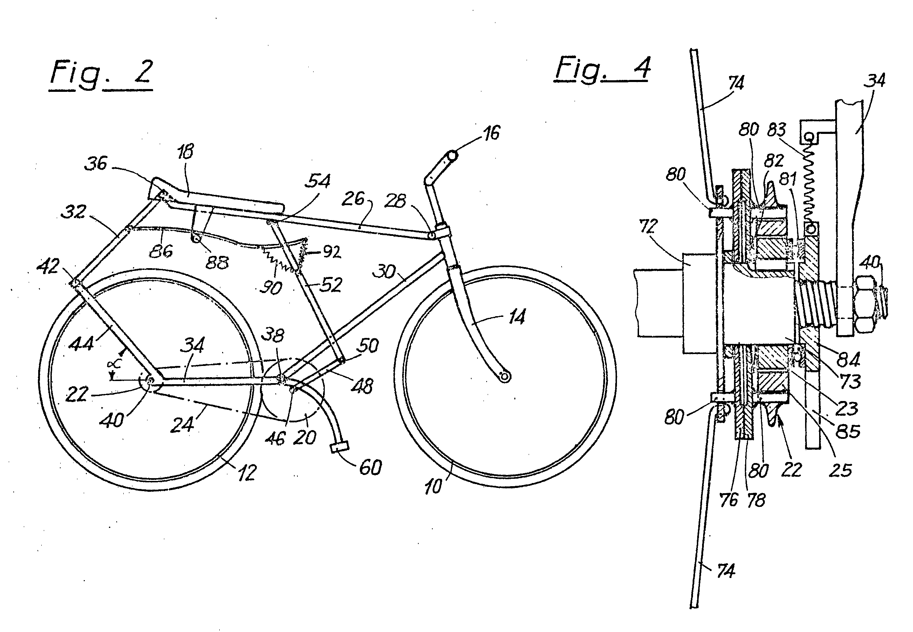

Das Ausführungsbeispiel gemäß Fig. 2 entspricht hinsichtlich des oberen Rahmenteils 26 und des vorderen Rahmenteils 30 im wesentlichen der Ausführung nach Fig. 1. Ein Unterschied besteht jedoch darin, daß der untere Rahmenteil 34, 44 ein einziges zusammenhängendes Teil ist, denn die beiden Seitenteile sind hinter dem Hinterrad durch ein sie verbindendes Stegteil miteinander vereinigt. Diese Konstruktion gibt dem Rahmen eine größere Steifigkeit und gestattet, statt 2 Gelenke 42 mit Kugellagern ein einziges Gelenk mit einer Kunststoffbuchse gemäß Fig. 3 a zu verwenden. Auberdem führt die größere Länge des hinteren Teils 44 des unteren Rahmenteils 34 im Vergleich zu Fig. 1 zur einem gröberen Antriebs-Drehmoment in derjenigen Bewegungsphase, wo das Gewicht auf dem Sattel ruht.

An seinem vorderen Ende ist der untere Rahmenteil 34 über das Gelenk 38 hinaus verlängert und nach unten umgebogen. Dort sind bei dieser Ausführung die Fußstützen 60 angebracht. Darin liegt im Vergleich zu Fig. 1 ebenso eine Verbesserung der beim Antrieb wirksamen Hebelübersetzung wie in der Anordnung des Lagers des treibenden Kettenrads 20 vor dem Gelenk 38, wie dies in Fig. 2 gezeigt ist.

In einer praktischen Ausführung mit 26-Zoll-Rädern hat das Fahrzeug nach Fig. 2 folgende Maße: der hintere Teil 44 des unteren Rahmenteils 34 ist 38 cm, die Kurbeln 48 sind 17 cm, die Pleuel 52 sind 46 cm und die übrigen Rahmenteile sind so lang, wie oben zu Fig. 1 angegeben. Der mit $\alpha$ bezeichnete Knickwinkel des unteren Rahmenteils 34, 44 beträgt etwa 50°.

Zur Beschreibung der Gelenke des Rahmens wird auf Fig. 3 a, b Bezug genommen. Dort ist das eine von zwei gelenkig miteinander verbundenen Rahmenteilen mit A bezeichnet, während das andere, jeweils aus zwei Streben bestehende Rahmenteil mit $B_1$ und $B_2$ bezeichnet ist. Im Falle der Gelenke 34, 54 und 28 ist jeweils der obere Rahmenteil 26 durch das Teil A in Fig. 3 a repräsentiert, während die parallelen Streben des hinteren Rahmenteils 32 bzw. der Pleuel 52 sowie parallele Laschen an der Klemmschelle 62 (Fig. 1) oder entsprechende Laschen, die mit dem vorderen Rahmenteil 30 verschweißt sind (Fig. 2) in Fig. 3 a durch die Bezugszeichen $B_1$, $B_2$ symbolisiert sind. Hinsichtlich des Gelenks 38 bedeutet das Teil A den vorderen Rahmenteil 30, und die Streben $B_1$, $B_2$ stellen den unteren Rahmenteil 34 dar. Im Falle des Gelenks 42 gemäß Fig. 2 entspricht das Teil A dem Steg, welcher die beiden Seitenteile des unteren Rahmenteils 34, 44 miteinander verbindet, während mit B₁, B₂ die parallelen Streben des hinteren Rahmenteils 32 bezeichnet sind.

Gemäß Fig. 3 a ist mit dem Rahmenteil A ein rohrförmiges Lagergehäuse 64 fest verbunden, z.B. verschweißt. Es enthält eine Lagerbuchse 66 aus Polyamid oder einem anderen als Lagerwerkstoff geeigneten Kunststoff. Ein Bolzen 68 erstreckt sich durch die Buchse 66 und ist darin drehbar gelagert. Wie gezeigt, ist der Bolzen 68 ein wenig länger als die Buchse 66 und das Lagergehäuse 64. Die Streben B₁, B₂ sind durch Schrauben 70, welche sich durch Löcher in den Streben B₁, B₂ erstrecken und in eine mittlere Gewindebohrung im Bolzen 68 eingeschraubt sind, fest mit diesem verbunden.

Das durch den Gelenkrahmen, die Kurbeln 48 sowie die Pleuel 52 gebildete Hebelgetriebe hat zwei Totlagen, die während der normalen Fahrt bei jeder Umdrehung des Kettenrads 20 überwunden werden müssen. Das ist kein Problem, wenn das hintere Kettenrad 22 drehfest mit dem Hinterrad 12 verbunden ist, macht jedoch besondere Vorkehrungen erforderlich, wenn es erwünscht ist, während der Fahrt, z.B. bergab, die Auf- und Abbewegung des Sattels anzuhalten, jedoch mit dem Fahrzeug weiterzurollen. Nachstehend seien zunächst zwei Lösungsmöglichkeiten dieses Problems an Hand Fig. 4 erläutert. Fig. 2 zeigt dann noch einem weiteren Vorschlag.

Um einerseits die Überwindung der Totlagen sicherzustellen, andererseits die Bewegungen des Sattels, der Fußstützen und des Lenkers während der Fahrt anzuhalten, bedient sich die Ausführung nach Fig. 4 einer aus zwei zusammenwirkenden Reibscheiben 76 und 78 bestehenden Reibungskupplung, welche während der normalen Fahrt das Schleppmoment von der mit 72 bezeichneten Nabe des Hinterrads 12, von dem in Fig. 4 nur Speichen 74 angedeutet sind, auf das Kettenrad 22—bei einem Fahrzeug mit offener Gangschaltung wird das Kettenrad 22 durch einen Block von z.B. 3 oder 5 unterschiedlich großen Kettenrädern ersetzt—überträgt. Das Kettenrad 22 sitzt axial verschieblich, aber z.B. mittels eines Keils undrehbar gehalten auf einem äuberen zapfenförmigen Teil 73 der Nabe 72 und besteht in herkömmlicher Ausführung aus zwei radial übereinander angeordneten Teilen 23 und 25, die durch einen nicht gezeigten Freilauf gekoppelt sind. Die Reibscheibe 76 ist mittels zweier oder mehr angeschweißter Zapfen 80 undrehbar an der Nabe 72 festgelegt, während die Reibscheibe 78 in gleicher Weise über angeschweißte Zapfen 80, die in Löcher oder Schlitze im radial äußeren Teil des Kettenrads 22 eingreifen, mit diesem undrehbar verbunden ist. Das größte Drehmoment, welches die Kupplung 76, 78 übertragen kann, wird bestimmt durch eine zwischen die Reibscheibe 78 und das Kettenrad 22 eingesetzte Tellerfeder 82, die durch eine auf die feststehende Achse 40 des Hinterrads 12 aufgeschraubte Mutter 84 gespannt wird. Die Mutter drückt über den radial inneren Teil 23 des Kettenrads 22 und gegebenenfalls über eine die Reibung zwischen diesen beiden Teilen verringernde Lagerscheibe oder ein Axial-Wälzlager 81 auf die Tellerfeder 82. Axial außerhalb der Mutter 84 ist dann, wie in Fig. 4 gezeigt, die Achse 40 des Hinterrads fest mit dem unteren Rahmenteil 34 verbunden.

Die Reibung zwischen den beiden Reibscheiben 76 und 78 braucht nicht groß zu sein, um die erwähnten Totlagen zu überwinden. Die Vorspannung der Tellerfeder 82 kann mit Hilfe der Mutter 84 durch einen einmalige Einstellung für lange Zeit so eingestellt werden, daß die beiden Reibscheiben 76, 78 immer dann gegeneinander rutschen, wenn der Fahrer dies wünscht und zu diesem Zweck sein Gewicht entgegengesetzt zur Bewegungsphase des Sattels un der Fußstütze verlagert, also z.B. in einer Phase, wo er eigentlich sein Gewicht auf den Sattel wirken lassen müßte, die Fußstützen belastet.

Anhand Fig. 4 läßt sich noch eine weitere alternative Ausführungsform der Erfindung erläutern. Statt einer auf ein bestimmtes maximales Drehmoment fest eingestellten Rutschkupplung kann nämlich auch eine lösbare Kupplung Verwendung finden. Zu diesem Zweck kann vorgesehen werden, daß der Druck auf die Reibscheiben 76, 78 während der Fahrt verändert werden kann, indem z.B. die Mutter 84 fest mit einem Hebel 85 verbunden wird, an dem ein vom Fahrer zu betätigender Bowdenzug angreift. Der Zugdraht des Bowdenzuges wirkt in der lösenden Drehrichtung auf den Hebel 85 und die Mutter 84, während in entgengengesetzter Drehrichtung, also in Richtung stärkerer Vorspannung der Tellerfeder 81, eine zwischen dem Hebel 85 oder der Mutter 84 einerseits und dem hinteren Rahmenteil 34 andererseits eingespannte weitere Feder 83 wirkt. Die Vorspannung der Feder 83 wird so eingestellt, daß die Kupplung 76, 78 unabhängig davon, ob der Fahrer sein Gewicht richtig oder falsch verlagert, niemals rutscht. Erst wenn der Fahrer mittels des Bowenzuges und des Hebels 85 die Mutter 84 entgegen der Wirkung der Feder 83 in Löserichtung aufdreht, können die Reibscheiben 76, 78 geneneinander rutschen, so daß der Sattel der Fahrt in seiner Auf- und Abbewegung anhält. Bei Verwendung einer kräftigen lösbaren Kupplung kann evtl. statt eines fest auf der Radnabe sitzenden Kettenrads mit Freilauf ein drehbar auf der Nabe sitzendes einfaches Kettenrad benutzt werden.

Die praktische Ausführung nach Fig. 2 enthält eine normale Freilaufnabe mit Rücktrittbremse. Die Nabe kann wahlweise auch ein Dreigang-Getriebe enthalten. Alternativ kann auch eine normale Freilaufnabe ohne Rücktrittbremse mit oder ohne Gangschaltung beliebiger Ausführung Verwendung finden. Da normale Freilaufnaben nur ein minimales Schleppmoment entwickeln, welches für die Überwindung der genannten Totlagen nicht ausreicht, zeigt Fig. 2 eine Konstruktion, welche das Problem der Totlagen auf andere Weise löst, Hierbei wird von der Tatsache ausgegangen, daß der Abstand zwischen zwei bestimmten Punkten einerseits am hinteren Rahmenteil 32 und andererseits am Pleuel 52 in derjenigen Totlage klein ist, in welcher sich der Sattel in seiner höchsten Stellung befindet, und in derjenigen Totlage groß ist, in welcher der Sattel die niedrigste Stellung hat. Wenn unter diesen Voraussetzungen eine in Fig. 2 mit 86 bezeichnete Stange gelenkig am hinteren Rahmenteil 32 angebracht und z.B. mittels einer am oberen Rahmenteil 26 gelagerten Rolle 88 so geführt wird, daß sie sich wenigstens in der obersten Stellung des Sattels nach vorn bis über das Pleuel 52 hinaus erstreckt, besteht die Möglichkeit, zwei Zugfedern 90, 92 in der Weise zwischen der Stange 86 und dem Pleuel 52 aufzuspannen, daß z.B. die Feder 92 stark gespannt und gleichzeitig die Feder 90 entspannt ist, wenn sich der Sattel in seiner höchsten Stellung befindet, andererseits die Feder 90 unter starker Spannung steht und die Feder 92 entlastet ist, während der Sattel die unterste Stellung einnimmt. Bei dieser Konstruktion sorgt dann jeweils eine der beiden Federn dafür, daß das Pleuel 52 wieder aus der Totlage bewegt wird.

Praktisch dasselbe Ergebnis kann auch mit nur einer einzigen Feder erreicht werden, welch etwa eine mittlere Stellung zwischen den beiden Federn 90 und 92 einnimmt und dann sowohl gespannt wird, wenn sich der Sattel in seine höchste Stellung bewegt als auch dann, wenn er sich seiner untersten Stellung nähert.

Es versteht sich, daß eine große Gestaltungsfreiheit bei der Formgebung der einzelnen Rahmenteile, der Gelenke und der Hinterradnabe besteht. Nur der Einfachheit halber sind die Rahmenteile im wesentlichen als gerade Stahlrohre dargestellt und beschrieben. Ebenso wie bei Fahrrädern sind selbstverständlich auch geschwungene Formen, Verkleidungen usw. möglich. Maßliche Abweichungen von den vorstehend beispielhaft genannten Maßen bringen gewisse Änderungen der relativen Bewegungen, Geschwindigkeiten und Beschleunigungen mit sich, die sich jedoch in einem verhältnismäßig weiten Rahmen nicht auf die grundsätzliche Funktionsfähigkeit auswirken. Nachdem einige Maße des Rahmens festgelegt worden sind, findet man durch Verschiebung der Gelenkpunkte, z.B. mittels Klemmschellen, wie im Zusammenhang mit Fig. 1 beschrieben, jeweils sehr schnell die optimale Lage der Gelenke, bei welcher der Kraftaufwand beim Fahren am geringsten und/oder die auf- und abschwingende Bewegung mit ihren wechselnden Beschleunigungen am harmonischsten ist. In der Serienfertigung können dann die Klemmschellen ersetzt werden durch fest angeschweißte Gelenkteile, wie z.B. in Fig. 3 a gezeigt. Als Lampenhalterung kann ein im wesentlichen U-förmiger, elastischer Bügel vorgesehen sein, der unmittelbar hinter dem Lager der Lenkstang mit seinem einen Schenkel am Teil 26 und mit dem anderen Schenkel am Teil 30 befestigt ist.

**Patentansprüche**

1. Fahrradähnliches Zweiradfahrzeug mit einem aus vier gelenkig miteinander verbundenen Teilen (26, 30, 32, 34) bestehenden Rahmen, von denen der obere Rahmenteil (26) einen Sattel (18), der vordere Rahmenteil (30) eine drehbar gelagerte und mit einer Lenkstange (16) verbundene Vorderradgabel (14) und der untere Rahmenteil (34) das Hinterrad (12) und das treibende Kettenrad (20) eines Kettentriebs (20, 22, 24) trägt, am vorderen oder unteren Rahmenteil (30, 34) Fußstützen (60) angebracht sind und zwischen dem oberen Rahmenteil (26) und einer mit dem treibenden Kettenrad drehfest verbundenen Kurbel (48) ein beidseitig gelenkig (20) gelagertes Pleuel (52) angeordnet ist, dadurch gekennzeichnet, daß sich der untere Rahmenteil (34) mit seinem hinteren Ende (44) über die Hinterradachse (40) hinaus erstreckt und als zweiarmiger Hebel wirkt.

2. Fahrzeug nach Anspruch 1, dadurch gekennzeichnet, daß sich das Gelenk (42) zwischen dem hinteren und dem unteren Rahmenteil (32, 34) radial außerhalb des Hinterrads (12) befindet.

3. Fahrzeug nach Anspruch 2, dadurch gekennzeichnet, daß der untere Rahmenteil (34) einstückig aus zwei am hinteren Ende durch einen Steg verbundenen parallelen Streben besteht, zwischen denen das Hinterrad (12) geführt ist.

4. Fahrzeug nach einem der Ansprüche 1 bis 3, dadurch gekennzeichnet, daß der untere Rahmenteil (34) hinter der Hinterradachse (40) um ungefähr 10 bis 60° nach oben abgebogen oder abgewinkelt ist.

5. Fahrzeug nach einem der Ansprüche 1 bis 4, dadurch gekennzeichnet, daß axial zu beiden Seiten des Lagers (46) des treibenden Kettenrads (20) in paralleler Anordnung je eine Kurbel (48) und eine Pleuelstange (52) angebracht sind.

6. Fahrzeug nach einem der Ansprüche 1 bis 5, dadurch gekennzeichnet, daß das Gelenk (38), welches den vorderen und den unteren Rahmenteil (30, 34) verbindet, koaxial mit dem Lager (46) des treibenden Kettenrads (20) angeordnet ist.

7. Fahrzeug nach einem der Ansprüche 1 bis 6, dadurch gekennzeichnet, daß das Lager (46) des treibenden Kettenrads (20) vor dem Gelenk (38) zwischen dem vorderen und dem unteren Rahmenteil (30, 34) am unteren Rahmenteil (34) angeordnet ist.

8. Fahrzeug nach einem der Ansprüche 1 bis 7, dadurch gekennzeichnet, daß in Kombination mit einem Freilauf in der Antriebsverbindung (25, 23, 73) zwischen dem getriebenen Kettenrad (22) des Kettentriebs (20, 22, 24) und der Nabe (72) des Hinterrads (12) in paralleler Anordnung zum Freilauf eine kraftschlüssige Kupplung (76, 78) angeordnet ist, welche als Rutschkupplung oder als willkürlich lösbare Kupplung ausgebildet ist.

9. Fahrzeug nach einem der Ansprüche 1 bis 7, dadurch gekennzeichnet, daß in Kombination mit einem Freilauf in der Antriebsverbindung (25, 23, 73) zwischen dem getriebenen Kettenrad (22) und der Nabe (72) des Hinterrads (12) am Pleuel (52) eine Federkraft (90, 92) angreift, welche das Pleuel (52) aus den zur Kurbel (48) parallelen Lagen zu bewegen bestrebt ist.

10. Fahrzeug nach einem der Ansprüche 1 bis 9 in Anwendung als home-trainer, dadurch gekennzeichnet, daß anstatt des Hinterrads (12) eine Schwungscheibe vorgesehen ist und ein standfestes Stativ den Rahmen (26, 30, 32, 34) mitsamt Schwungscheibe trägt, wobei der vordere Rahmenteil (30) durch eine Rad (10) oder über eine Führung am Stativ am Boden abgestützt ist.

## Revendications

1. Véhicule à deux roues du type bicyclette avec un cadre, composé de quatre parties (26, 30, 32, 34) articulées, dont la partie supérieure (26) est munie d'une selle, la partie de devant (30) d'une fourche de la roue directrice (14) supportée dans un palier rotatif et assemblée avec le guidon (16), et la partie inférieure (34) tient la roue arrière (12) ainsi que le pignon (20) motrice d'une transmission par chaîne (20, 22, 24), à la partie de devant ou inférieure de cadre (30, 34) il y des pédales (60) et entre la partie supérieure du cadre (26) et une manivelle (48) rotative jointe au pignon motrice il y a une bielle (52) supportée de deux côtés d'une manière articulée (20), caractérisée en ce que la partie inférieure (34) s'étend avec son bout derrière (44) plus loin que l'essieu (40) de la roue arrière et travaille comme levier à deux bras.

2. Véhicule d'après revendication 1 caractérisé en ce que l'articulation (42) entre la partie arrière et la partie inférieure du cadre (32, 34) se trouve radialement en dehors de la roue arrière (12).

3. Véhicule d'après revendication 2 caractérisé en ce que la partie inférieure du cadre (34) est faite d'une seule pièce consistant de deux entretoises parallèles jointes à leur bout derrière d'une traverse et entre lesquelles se trouve la roue arrière (12).

4. Véhicule d'après les revendications 1 à 3, caractérisé en ce que la partie inférieure du cadre (34) derrière l'essieu de la roue arrière a une courbe ou une équerre vers le haut de 10 à 60 degrés.

5. Véhicule d'après une des revendications 1 à 4, caractérisé en ce qu' axialement aux deux côtés du palier du pignon motrice (20) il y a une manivelle (48) de disposition parallèle et une bielle (52).

6. Véhicule d'après une des revendications 1 à 5, caractérisé en ce que l'articulation (38) qui joint la partie de devant et la partie inférieure du cadre (30, 34) est disposée coaxialement avec le palier (46) du pignon motrice.

7. Véhicule d'après une des revendications 1 à 6, caractérisé en ce que la palier (46) du pignon motrice est disposé à la partie inférieure du cadre (34) devant l'articulation (38) entre la partie de devant et la partie inférieure du cadre (30, 34).

8. Véhicule d'après une des revendications 1 à 7, caractérisé en ce qu'en combinaison avec un mécanisme de la roue libre dans la transmission (25, 23, 73) entre le pignon (22) propulsé de la transmission par chaîne (20, 22, 24) et le moyeu (72) de la roue arrière (12) un accouplement (76, 78) à friction est disposé parallèlement au mécanisme de la roue libre qui est construit comme accouplement à glisser ou comme accouplement à debrayer arbitairement.

9. Véhicule d'après une des revendications 1 à 7, caractérisé en ce qu'en combinaison avec un mécanisme de la roue libre dans la transmission (25, 23, 73) entre le pignon propulsé (22) et le moyeu (72) de la roue arrière (12) un ressort (90, 92) opère sur la bielle (52) qui cherche à mouvoir la bielle (52) en dehors des positions parallèles de la manivelle (48).

10. Véhicule d'après une des revendications 1 à 9 en application de home trainer, caractérisé en ce qu'au lieu de la roue arrière (12) on a pourvu un volant et un support solide tient le cadre (26, 30, 32, 34) avec le volant pendant que la partie de devant du cadre (30) est supportée par une roue (10) ou par un guide monté au support.

## Claims

1. Two-wheeled bicycle-type vehicle with a frame consisting of four pivotably interconnected frame members (26, 30, 32, 34) of which the upper frame member (26) carries a saddle (18), the front frame member (30) is provided with a bearing for a rotatable front wheel fork (14) connected to a steering handle (16) and the lower frame member (34) carries the rear wheel (12) and the driving sprocket wheel (20) of a chain drive (20, 22, 24), the front frame member (30) or the lower frame member (34) being provided with pedals (60) and a connecting rod (52) extending between and being pivotably connected to the upper frame part (26) and a crank arm (48) fixed to the driving sprocket wheel (20), characterized in that the lower frame part (34) with its rear end extends beyond the rear wheel axle (40) and functions as a two-armed lever.

2. Vehicle according to claim 1, characterized in that the joint (42) between the rear frame part (32) and the lower frame part (34) is located radially outside of the rear wheel (12).

3. Vehicle according to claim 2, characterized in that the lower frame part (34) consists of two integral parallel rods interconnected at their rear ends by a bridge the rear wheel being held between these rods.

4. Vehicle according to one of claims 1 to 3, characterized in that the lower frame part (34) behind the rear wheel axle (40) has a bend or angle directed upwardly by about 10° to 60°.

5. Vehicle according to one of claims 1 to 4, characterized in that axially on both sides of the bearing (46) of the driving sprocket wheel (20) there is provided in parallel disposition one crank arm (48) and one connecting rod (52).

6. Vehicle according to one of claims 1 to 5, characterized in that the joint (38) connecting the front frame part (30) and the lower frame part (34) is located coaxially with the bearing (46) of the driving sprocket wheel (20).

7. Vehicle according to one of the claims 1 to 5, characterized in that at the lower frame part (34) the bearing (46) of the driving sprocket wheel (20) is located in the front of the joint (38) between the front frame part (30) and the lower frame part (34).

8. Vehicle according to one of the claims 1 to 7, characterized in that in combination and in parallel with a free-wheel mechanism in the transmission (25, 23, 73) between the driven sprocket wheel (22) of the chain drive (20, 22, 24) and the hub (72) of the rear wheel (12) there is provided a friction clutch (76, 78) of the type of a safety clutch or being disengageable at will.

9. Vehicle according to one of the claims 1 to 7, characterized in that in combination with a free-wheel mechanism in the transmission (25, 23, 73) between the driven sprocket wheel (22) and the hub (72) of the rear wheel (12) a spring force (90, 92) works on the connecting rod (52) trying to move it out of positions in parallel with the crank arm (48).

10. Vehicle according to one of the claims 1 to 9 in application as home-trainer, characterized in that a fly-wheel is provided instead of the rear wheel (12) and a stand supports the frame (26, 30, 32, 34) together with the fly-wheel, wherein the front frame part (30) is supported on the ground by means of a wheel (10) or a guide rail mounted on the stand.

Fig. __1

Fig. 4

Fig. 2

## Fig. 3a

A

70

64

70

66   68

B₁   B₂

## Fig. 3b

A